# EUROPEAN PATENT APPLICATION

(11) **EP 3 354 435 A1**
(43) Date of publication of application: **01.08.2018**
(21) Application number: 16847861.8
(22) Date of filing: 28.06.2016
(51) Int. Cl.: B29B 17/04

(54) **SPECIAL GRINDER FOR PLASTICS**

(30) Priority: 24.09.2015 CN 201510617420
(71) Applicant: Shanghai Matsui Machinery Co., Ltd., Shanghai 201108 (CN)
(72) Inventor: SUN, Dianqiang, Shanghai 201108 (CN)
(74) Representative: Cabinet Chaillot
(86) International application number: PCT/CN2016/087424
(87) International publication number: WO 2017/049979

(57) **Abstract**

A plastic-dedicated shredder according to the present invention includes at least a hopper, a shredder housing located below the hopper, and a base to which the shredder housing is fixed. The shredder housing includes at least a lower hosing and an upper housing that can open and close. The shredder housing includes a rotation blade support. A rotation blade is fixed to the lower housing and arranged in a shredding chamber of the rotation blade support. The rotation blade support includes a blade support main body and a blade support segment that are separable from each other. The blade support segment is configured to be movable relative to the blade support main body to open and close the shredding chamber. In the present invention, the rotation blade support is divided into two parts, the blade support main body and the blade support segment. When cleaning the shredding chamber, the blade support segment is moved to open the shredding chamber of the rotation blade support and thoroughly clean and remove residues from the shredding chamber.

## Description

### BACKGROUND OF THE INVENTION

The present invention relates to the field of plastic processing devices and, more particularly, to dedicated shredding machines applied to plastic scrap.

In the plastic processing field of injection molding or the like, a process for shredding and reusing plastic molding product scrap is always performed. As shown in Figs. 1 to 4, Chinese Patent No. 201220533276.2 describes a plastic-dedicated shredding machine mainly configured by a hopper 1, a shredder housing 2, a base 3, and a discharge hopper. The hopper 1 is used to feed shredding material. The shredder housing 2, which is located below the hopper 1, mainly functions to provide a shredding chamber that shreds the supplied shredding material. The base 3 is used to support members such as the shredder housing 2 and the hopper 1.

The core member of such a shredding machine is the shredder housing 2 that includes parts for realizing the shredding function. The shredder housing 2 includes coupling plates 21, a first groove plate 22, a second groove plate 23, large rotation blades 24, and small rotation blades 25. The first groove plate 22 and the second groove plate 23 are arranged next to each other.

The first groove plate 22 is integrally coupled and fixed to the coupling plates 21. The second groove plate 23 is separate from the coupling plates 21 and arranged opposing the first groove plate 22.

The large rotation blades 24 are spaced apart from the small rotation blades 25 on the same rotation shaft. The large rotation blades 24 are coupled to and driven by the rotation shaft and a driving member 4.

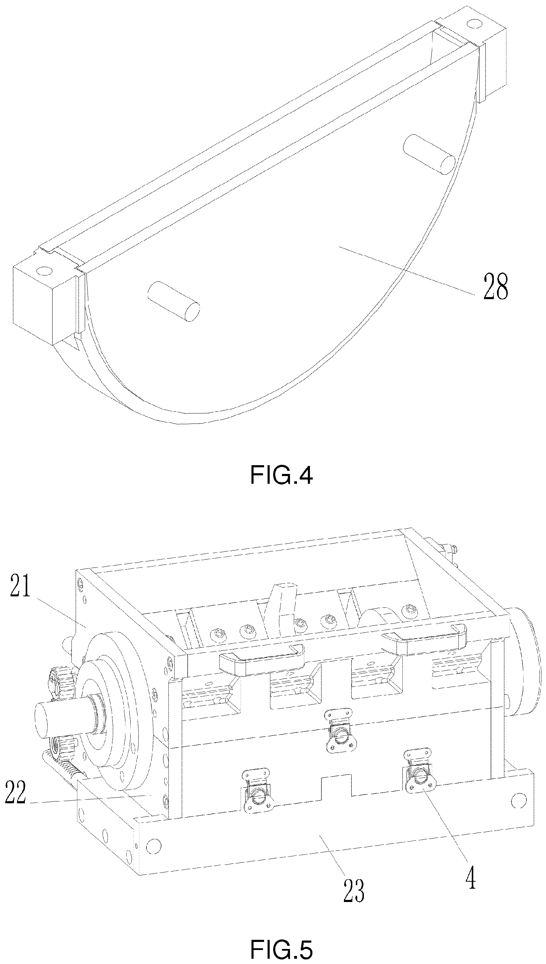

To further improve and increase the cutting effect, blade supports 28 (refer to Fig. 4) are further arranged in the shredder housing 2. The blade supports 28 can be manufactured in accordance with a standard that is based on the size of different rotation blades. Further, the blade supports 28 are arranged in accordance with the positions of the corresponding rotation blades so as to entirely cooperate with the cutting performed by the rotation blades.

The first groove plate 22 and the second groove plate 23 each include first cutting grooves 26, which functions in cooperation with the large rotation blades 24, and second cutting grooves 27, which function in cooperation with the small rotation blades 25.

The large rotation blades 24 cooperate with the first cutting grooves 26 and mainly perform rough cutting on the entire shredding material (e.g., plastic). The small rotation blades 25 cooperate with the second cutting grooves 27 to finely cut the large shredded material produced by the rough cutting and ultimately form solid granules.

The bottom end of the hopper 1 is coupled by a first reversing shaft to the shredder housing 2, and the coupling plates 21 are coupled by a second reversing shaft to the shredder housing 2.

When the plastic-dedicated shredder is actuated, shredding material of plastic or the like from the hopper 1 enters the shredding chamber of the shredder housing 2. Then, the large rotation blades 24 cooperate with the corresponding blade supports 28 and the first cutting grooves 26 to perform rough cutting entirely on the shredding material. Then, in the same shredding chamber, the small rotation blades 25 cooperate with the corresponding blade supports and the second cutting grooves 27 to further perform fine cutting on the shredding material. Finally, the shredded solid granules are collected by the discharge hopper.

When performing maintenance or cleaning during actual use of the machine, the shredder housing 2 needs to be opened at non-regular intervals to maintain and clean the shredding chamber and keep the entire machine in a satisfactory operational state. In particular, when shredding a different type of shredding material (e.g., plastic), the shredding chamber must be thoroughly cleaned to remove residues. However, the rotation blades are arranged in the corresponding cutting grooves. This makes it difficult to clean the cutting grooves.

Thus, there is a demand for the development of a plastic-dedicated shredder that is easy for a person of the art to clean.

### BRIEF SUMMARY OF THE INVENTION

Accordingly, it is an object of the present invention to provide a plastic-dedicated shredder that is easy to clean.

To achieve the above object, the present invention provides a plastic-dedicated shredder including a hopper, a shredder housing located below the hopper, and a base to which the shredder housing is fixed. The shredder housing includes at least a lower housing and an upper housing that can open and close. The shredder housing includes a rotation blade support. A rotation blade is fixed to the lower housing and located in a shredding chamber of the rotation blade support. The rotation blade support includes a blade support main body and a blade support segment that are separable from each other. The blade support segment is configured to be movable relative to the blade support main body to open and close the shredding chamber.

In the plastic-dedicated shredder of the present invention, the blade support main body is fixed to the lower housing, the blade support segment is fixed and coupled to a slide plate and configured to be movable relative to the lower housing.

In the plastic-dedicated shredder of the present invention, the upper housing and the slide plate is driven manually or automatically or driven by pneumatic pressure or hydraulic pressure.

In the plastic-dedicated shredder of the present invention, a lock that can be opened and closed is arranged between the slide plate and the lower housing.

In the plastic-dedicated shredder of the present invention, the upper housing is cooperatively coupled by a transmission mechanism to the slide plate.

In the plastic-dedicated shredder of the present invention, the transmission is one set or two sets of a rack and pinion mechanism.

In the plastic-dedicated shredder of the present invention, the lack and pinion mechanism is a structure including a single rack and a plurality of pinions or structure including a single rack and a single pinion.

In the plastic-dedicated shredder of the present invention, the rotation blade support is a steel welding plate member.

In the plastic-dedicated shredder of the present invention, a gas spring arranged on one side of the shredder housing.

In the plastic-dedicated shredder of the present invention, two ends of the gas spring are respectively coupled to the upper housing and the lower housing.

The present invention includes the advantages described below.

The plastic-dedicated shredder according to the present invention provides the structural design describe above in which the rotation blade support can be separated into two parts, the blade support main body and the blade support segment. Thus, when cleaning the shredding chamber, the blade support segment is moved to open the shredding chamber of rotation blade support and thoroughly clean and the shredding chamber by removing residues.

To sufficiently understand the object, features, and effect of the present invention, the concept, specific embodiments, and effect of the present invention will now be described.

### BRIEF DESCRIPTION OF THE DRAWINGS

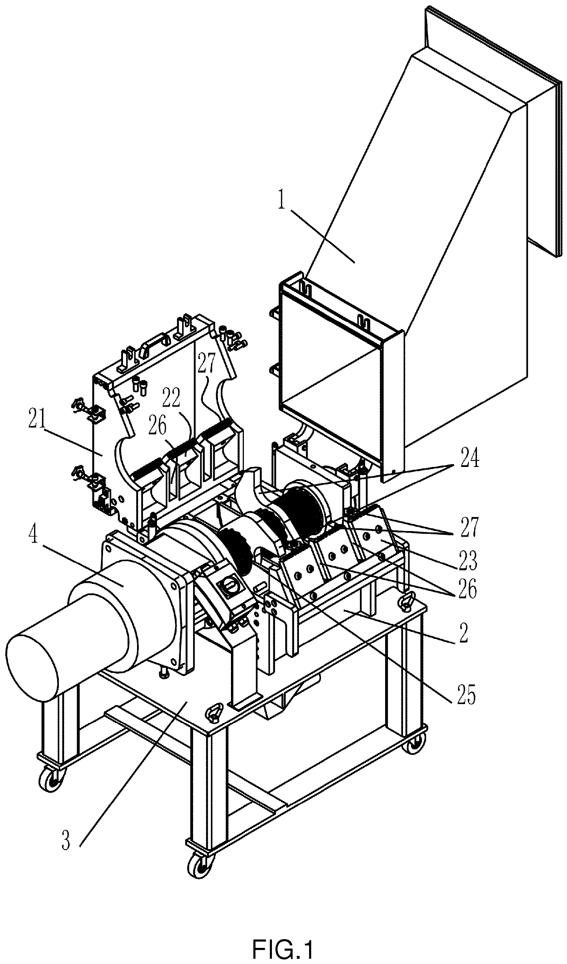

Fig. 1 is a schematic diagram showing a conventional plastic-dedicated shredder when separated from a hopper.

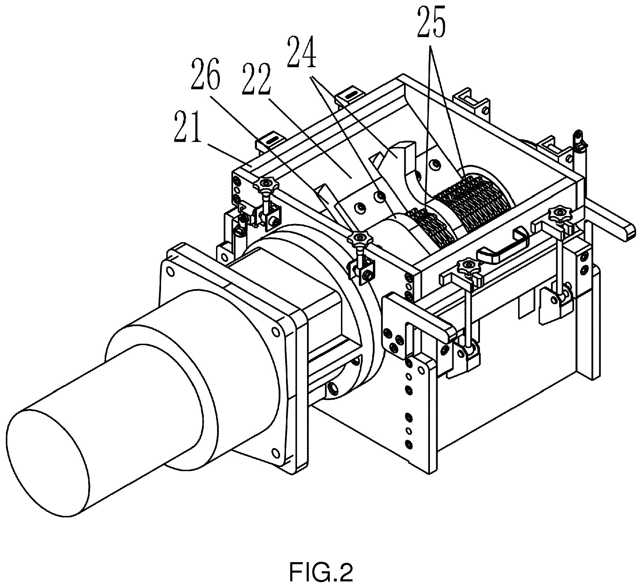

Fig. 2 is a schematic diagram showing a shredder housing of Fig. 1 in an actuated state.

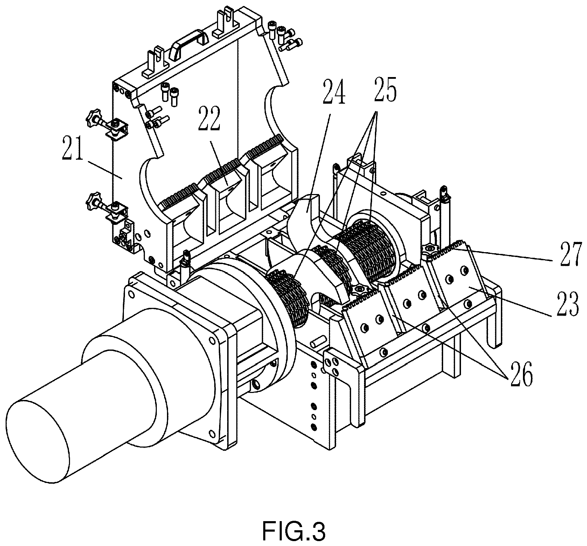

Fig. 3 is a schematic diagram showing the shredder housing of Fig. 2 in an open state.
Fig. 4 is a schematic diagram of a rotation blade support in the shredder housing shown in Fig. 2.
Fig. 5 is a schematic diagram of a shredder housing in one embodiment of the present invention.
Fig. 6 is a schematic left view of the shredder housing of Fig. 5.
Fig. 7 is a schematic diagram showing the shredder housing of Fig. 5 in an open state.
Fig. 8 is a schematic left view of the shredder housing shown in Fig. 7.
Fig. 9 is a schematic right view of the shredder housing shown in Fig. 7.
Fig. 10 is a schematic cross-sectional view of the shredder housing shown in Fig. 7.
Fig. 11 is a schematic diagram showing a cooperating mechanism of the shredder housing.
Fig. 12 is a schematic left view of a shredder housing according to a further embodiment of the present invention.
Fig. 13 is a schematic right view of a shredder housing according to another embodiment of the present invention.

### DETAILED DESCRIPTION OF THE INVENTION

### First Embodiment

A plastic-dedicated shredder according to one embodiment of the present invention includes a hopper, a shredder housing located below the hopper, and a base to which the shredder housing is fixed. The hopper is used to feed shredding material. The shredder housing includes a shredding chamber and shreds the fed shredding material into granules. The base functions to support the entire shredder housing and members such as the hopper. The hopper and the base have structures that are the same or similar to the prior art and thus will not be described in detail.

The main improvement of the present invention is in the shredder housing.

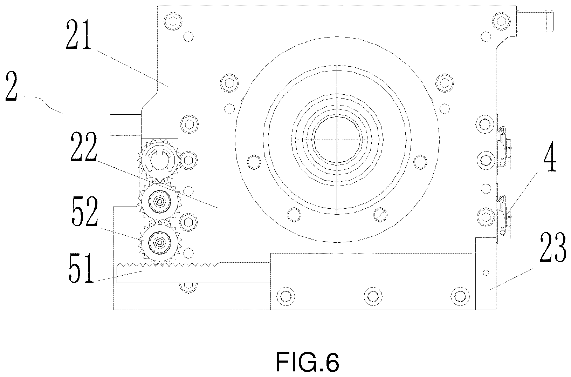

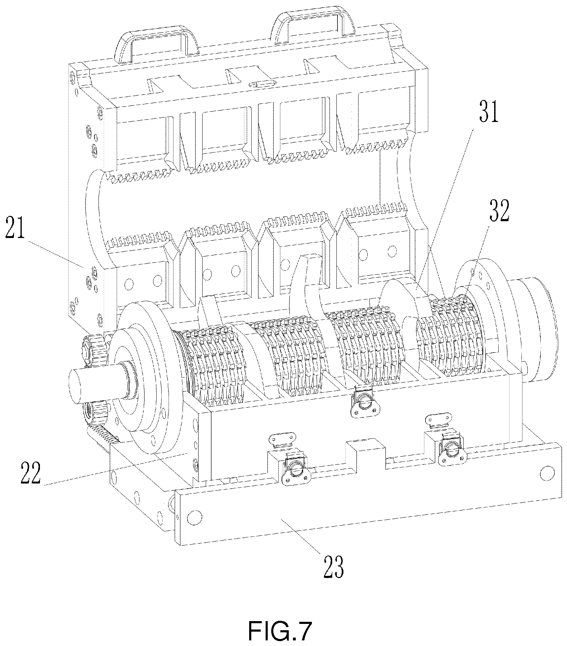

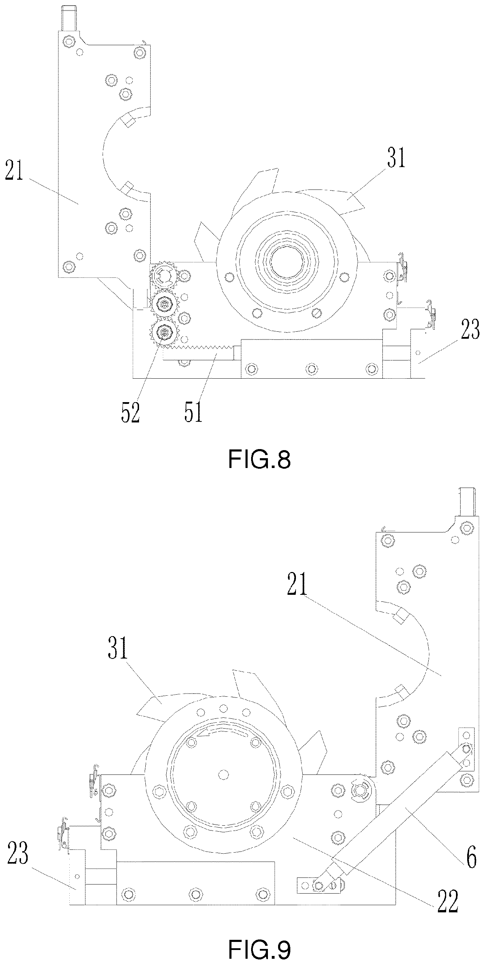

As shown in Figs. 5 to 10, in the present embodiment, the shredder housing 2 is formed by an upper housing 21 and a lower housing 22. The shredder housing 2 accommodates large rotation blades 31 and small rotation blades 32 that are arranged on the same rotation shaft. The shredder housing 2 also accommodates a rotation blade support. The rotation shaft is coupled and driven by an external driving member. The driving member may be a motor that drives and rotates the rotation blades or any other versatile driving member used in this field.

The rotation blade support is fixed to the lower housing 22 and shaped in conformance with the large rotation blades 31 and the small rotation blades 32. The large rotation blades 31 are arranged in the shredder chamber on the rotation blade support.

In the present embodiment, the rotation blade support includes a blade support main body 11 and a blade support segment 12 that are separable. The blade support segment 12 is moved relative to the blade support main body 11 to open and close the shredding chamber. This allows the shredding chamber to be cleaned and residues to be removed. When performing maintenance or cleaning, residues may be swept out of the shredder chamber to thoroughly remove residual shredding material granules from the shredding chamber.

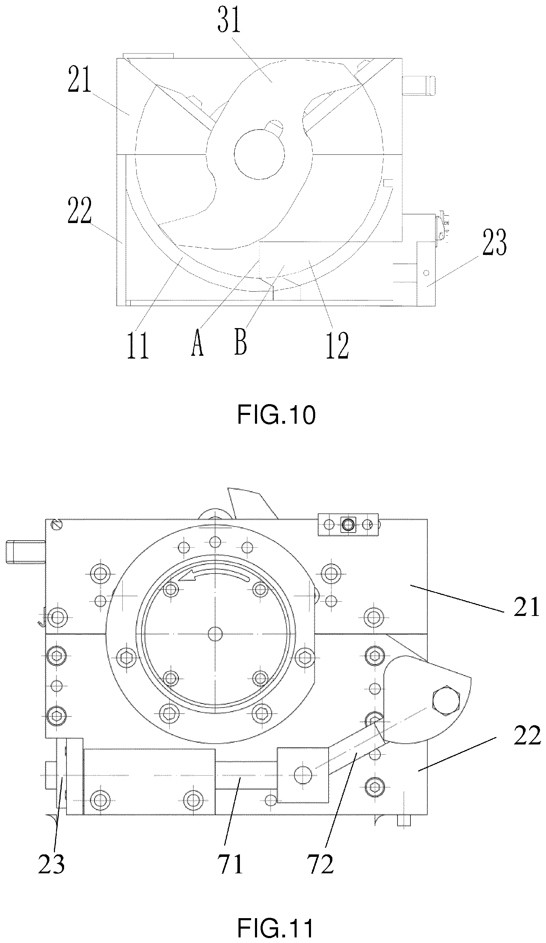

In Fig. 10, position A is where the blade support segment 12 is joined integrally with the blade support main body 11 (at this position, rotation blade support is in a normal actuation state). Position B is where the blade support segment 12 is pulled out and separated from the blade support main body 11 (at this position, rotation blade support is open and can be cleaned).

To facilitate processing, a steel welding plate member is used as the rotating blade support.

In the preferred embodiment, the blade support segment 12 is fixed to a slide plate 23.

In the preferred embodiment, locks 4 that can be opened and closed are arranged between the slide plate 23 and the lower housing 22. When the locks 4 are closed, the slide plate 23 and the lower housing 22 are fixed integrally to each other. When the locks 4 are open, the slide plate 23 is movable relative to the lower housing 22.

In the present embodiment, the upper housing 21 is manually driven and arranged so that the upper housing 21 can open and close the lower housing 22. To simplify the operation performed by the operator, the upper housing 21 is cooperatively coupled by a transmission mechanism to the slide plate 23. When the operator opens the upper housing 21, the transmission mechanism moves the slide plate 23 in accordance with changes in the angle of the upper housing 21.

Cooperative coupling means that when the upper housing 21 and the lower housing 22 are open, the blade support segment 12 is moved relative to the lower housing 22, and the blade support main body 11 and the blade support segment 12 are separated from each other. Further, when the upper housing 21 and the lower housing 22 are closed, the blade support segment 12 is returned to its original position relative to the lower housing 22, and the blade support main body 11 and the blade support segment 12 are joined with each other.

In a further example, the upper housing 21 may be mechanically driven by a motor, a pneumatic pump, or the like.

In the present embodiment, the transmission mechanism is a single set of a rack and pinion mechanism. More specifically, the transmission mechanism is a structure including a single rack 51 and a plurality of pinions 52.

Further, a gas spring 6 is arranged on one side of the shredder housing 2. The gas spring 6 has one end coupled to the upper housing 21 and another end coupled to the lower housing 22.

In another example, the upper housing 21 may be moved by the slide plate 23. In this case, cooperative coupling of the upper housing 21 and the slide plate 23 means that when the slide plate 23 is pulled out of the lower housing 22 (in this state, blade support segment 12 is separated from blade support main body 11), the upper housing 21 and the lower housing 22 are open (shredder housing can undergo maintenance or cleaning). Further, when the slide plate 23 is returned to its original position relative to the lower housing 22 (in this state, blade support segment 12 and blade support main body 11 are closed), the upper housing 21 and the lower housing 22 are closed (shredder housing can be actuated).

The upper housing 21 and the slide plate 23 are in a cooperative coupling relationship. When one of the upper housing 21 and the slide plate 23 is a driving member, the other one of the upper housing 21 and the slide plate 23 is a driven member.

As shown in Fig. 11, in a further example, a cooperative mechanism that realizes cooperative coupling may be a connecting rod mechanism formed by a first connecting rod 71 and a second connecting rod 72. One of the first and second connecting rods is a driving member driven manually or automatically or by pneumatic pressure or hydraulic pressure. The other one of the first and second connecting rods is a driven member.

To simplify the structure, as another example, the upper housing 21 and the slide plate 23 may have any cooperative relationship. In this case, the operator needs to open the upper housing 21 and the slide plate 23 or close the upper housing 21 and the slide plate 23. However, this does not affect the application of the present invention.

### Second Embodiment

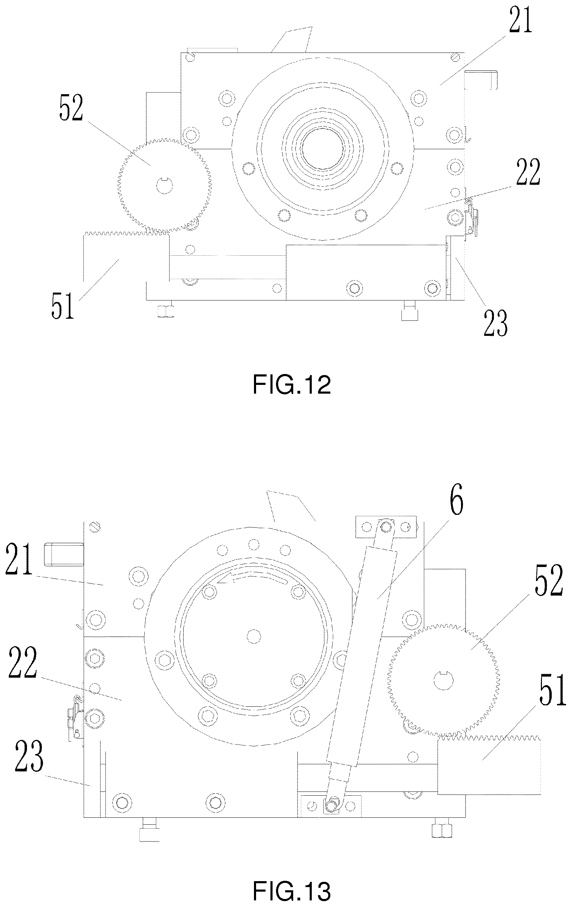

As shown in Figs. 12 and 13, in a further embodiment of the present invention, the structure of the plastic-dedicated shredder is similar to that of the first embodiment. The present embodiment differs from the first embodiment in that a transmission mechanism formed by a rack and pinion mechanism is arranged at each of the left and right sides. Further, the rack is increased in thickness and the pinion is increased in size.

This structure allows the operator to easily pull the slide plate 23 with a single hand and, at the same time, move and open the upper housing 21.

As another example, the number and size of the rotation blades may be selected in accordance with the size of the entire device and are not limited to the above embodiment.

Preferred embodiments of the present invention have been described above. It is apparent that many changes and modifications may be made to the present invention without the need for creative efforts by one of normal skill in the art. Accordingly, techniques obtained through logic analysis and finite experiments using the prior art based on the concept of the present invention by an artisan are included in the scope of the claims.

## Claims

1. A plastic-dedicated shredder including a hopper, a shredder housing located below the hopper, and a base to which the shredder housing is fixed, wherein the shredder housing includes at least a lower housing and an upper housing that can open and close, the shredder housing includes a rotation blade support, and a rotation blade is fixed to the lower housing and located in a shredding chamber of the rotation blade support, the plastic-dedicated shredder being **characterized in that**:
the rotation blade support includes a blade support main body and a blade support segment that are separable from each other; and
the blade support segment is configured to be movable relative to the blade support main body to open and close the shredding chamber.

2. The plastic-dedicated shredder according to claim 1, **characterized in that** the blade support main body is fixed to the lower housing, the blade support segment is fixed and coupled to a slide plate and configured to be movable relative to the lower housing.

3. The plastic-dedicated shredder according to claim 2, **characterized in that** the upper housing and the slide plate is driven manually or automatically or driven by pneumatic pressure or hydraulic pressure.

4. The plastic-dedicated shredder according to claim 2, **characterized in that** a lock that can be opened and closed is arranged between the slide plate and the lower housing.

5. The plastic-dedicated shredder according to claim 2, **characterized in that** the upper housing is cooperatively coupled by a transmission mechanism to the slide plate.

6. The plastic-dedicated shredder according to claim 5, **characterized in that** the transmission is one set or two sets of a rack and pinion mechanism.

7. The plastic-dedicated shredder according to claim 6, **characterized in that** the lack and pinion mechanism is a structure including a single rack and a plurality of pinions or structure including a single rack and a single pinion.

8. The plastic-dedicated shredder according to any one of claims 1 to 7, **characterized in that** the rotation blade support is a steel welding plate member.

9. The plastic-dedicated shredder according to claim 8, **characterized by** a gas spring arranged on one side of the shredder housing.

10. The plastic-dedicated shredder according to claim 9, **characterized in that** two ends of the gas spring are respectively coupled to the upper housing and the lower housing.
